## Europäisches Patentamt

## European Patent Office

## Office européen des brevets

(11) Publication number: **0 101 226**
**B1**

# EUROPEAN PATENT SPECIFICATION

(12)

(45) Date of publication of patent specification: **06.12.89**

(21) Application number: **83304383.9**

(22) Date of filing: **28.07.83**

(51) Int. Cl.⁴: **G 05 B 13/02, F 23 J 3/00**

(54) Sootblowing optimization.

(30) Priority: **06.08.82 US 405840**

(43) Date of publication of application:
**22.02.84 Bulletin 84/08**

(45) Publication of the grant of the patent:
**06.12.89 Bulletin 89/49**

(84) Designated Contracting States:
**·DE FR GB IT**

(56) References cited:
**none**

(73) Proprietor: **THE BABCOCK & WILCOX COMPANY**
**1010 Common Street P.O. Box 60035**
**New Orleans Louisiana 70160 (US)**

(72) Inventor: **Moss, William H.**
**34996A N. Turtle Trail**
**Willoughby Ohio 44094 (US)**
Inventor: **Popiel, Lawrence**
**4689 Lake Road**
**Sheffield Lake Ohio 44054 (US)**
Inventor: **Scheib, Thomas J.**
**12865 Woodside Drive S.**
**Chesterland Ohio 44026 (US)**

(74) Representative: **Cotter, Ivan John et al**
**D. YOUNG & CO. 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method of optimizing cycle time to schedule sootblowing during the operation of a boiler, for example a fossil or other organic fuel boiler.

The combustion of fossil fuels for the production of steam or power generates a residue broadly known as ash. All but a few fuels have solid residues, and in some instances, the quantity is considerable (see Table I below).

For continuous operation, removal of ash is essential. In suspension firing the ash particles are carried out of the boiler furnace by the gas stream and form deposits on the tubes in the gas passes (fouling). Under some circumstances, the deposits may lead to corrosion of these surfaces.

Some means must be provided to remove the ash from the boiler surfaces since ash in its various forms may seriously interfere with operation or even cause shutdown. Furnace wall and convection-pass surfaces can be cleaned of ash and slag while in operation by the use of sootblowers using steam or air as a blowing medium. The sootblowing equipment directs product air through retractable nozzles aimed at the areas where deposits accumulate.

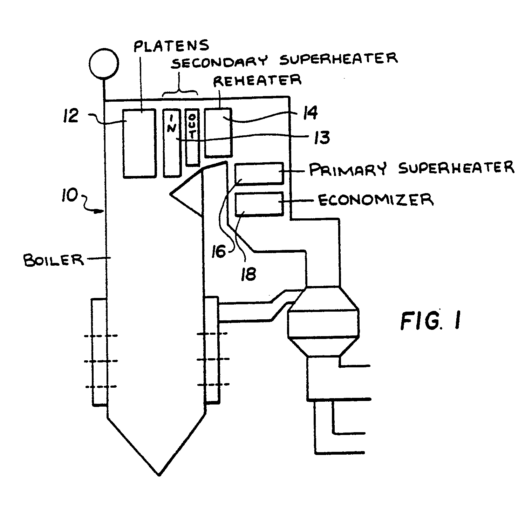

The convective pass surfaces in the boiler, sometimes referred to as heat traps, are divided into distinct sections in the boiler (see Figure 1). Each heat trap normally has its own dedicated set of sootblowing equipment. Usually, only one set of sootblowers is operated at any time, since the sootblowing operation consumes product steam and at the same time reduces the heat transfer rate of the heat trap being cleaned.

Scheduling and sequencing of sootblowing is usually implemented with timers. The timing schedule is developed during initial operation and startup of the boiler. In addition to timers, critical operating parameters, such as "gas side" differential pressure, will interrupt the timing schedule when emergency plugging or fouling conditions are detected. The expression "gas side", as used herein, means the side of a heat trap which is in contact with exhaust gas (and therefore subject to the deposition of soot), as opposed to the other side, which is in contact with a heat exchange fluid (water or steam) and is known as the "tube side".

TABLE I
Commercial fuels for steam production

| Fuels containing ash | Fuels containing little or no ash |
|---|---|
| All coals | Natural gas |
| Fuel oil—"Bunker C" | Manufactured gas |
| Refinery Sludge | Code-oven gas (clean) |
| Tank residues | Refinery gas |
| Refinery coke | Distillates |
| Most tars | |
| Wood and wood products | |
| Other vegetable products | |
| Waste-heat gases (most) | |
| Blast-Furnace gas | |
| Cement-kiln gas | |

The sequencing and scheduling of the sootblowing operation can be automated by using controls. See U.S. Patent No. US—A—4 085 438 to Butler, issued April 18, 1978, for example. The scheduling is usually set by boiler cleaning experts who observe boiler operating conditions and review fuel analyses and previous laboratory tests of fuel fouling. The sootblower schedule control settings may be accurate for the given operating conditions which were observed, but the combustion process is highly variable. There are constant and seasonal changes in load demand and gradual long term changes in burner efficiency and heat exchange surface cleanliness after sootblowing. Fuel properties can also vary for fuels such as bark, refuse, blast furnace gas, residue oils, waste sludge, or blends of coals. As a result, sootblowing scheduling based on several days of operating cycles may not result in the most economical operation of the boiler.

Present practice for sootblowing scheduling is based on the use of timers. The timing schedule is developed during initial operation and start-up. No one timing schedule can be ecomonically optimum, for

2

there are constant and seasonal changes in load demand, fuel variations, and gradual long term changes in burner efficiency and heat exchange surface cleanliness after sootblowing.

A boiler diagnostic package which can be used for sootblowing optimization has been proposed by T. C. Heil et al in an article entitled "Boiler Heat Transfer Model for Operator Diagnostic Information" given at the ASME/IEEE Power Gen. Conference in October 1981 at St. Louis, Missouri. The method depends upon estimates of "gas side" temperatures from coupled energy balances, and the implementation requires extensive recursive computations to solve a series of heat trap equations. This method is used to estimate heat transfer fouling factors. These intermediate results are then used as input to a boiler performance model based on steady state design conditions to estimate cost savings resulting from sootblower initiation. There is no economic optimization, however, and the method does not account for dynamic changes in incremental steam cost.

A preferred embodiment of the present invention described in detail hereinbelow is directed to a method for predicting the optimum economic cycle time to schedule sootblowing which uses on line process measurements. The optimum cycle times dynamically adjust to changing conditions resulting from boiler operation, fuel changes, or seasonal changes. The optimum conditions are based on economic criteria which account for heat trap fouling, rate of fouling, rate of fouling of other heat traps within the boiler, and on line incremental steam cost.

This preferred sootblowing optimization method has significant advantages over conventional sootblowing automation and optimization packages in that:

(a) Optimum cycle time is based on economic criteria, not inferred from heat transfer efficiency.

(b) Optimum cycle time is determined instantaneously in real time. The optimum cycle time adapts to varying operating and economic conditions.

(c) Factors such as sootblowing effectiveness, fouling on adjacent heat traps, and incremental steam cost and loading are taken into account in the dynamic calculation of optimum cycle time.

(d) The optimization only requires measurements which are readily available. No "gas side" furnace temperatures are necessary.

(e) The calculations are simple and easy to understand. There are no recursive calculations or system of interacting equations to solve.

(f) The optimization does not depend on design factors or initial warranty performance data.

According to the present invention there is provided a method of optimizing cycle time $\theta_{opt}$ of sootblowing during the operation of a boiler having an input of fluid with a particular specific heat $c_p$ to generate steam at a particular cost per unit of heat in the boiler, the method being characterised by sensing the input and output temperatures of fluid to and from the boiler to obtain a difference $\Delta t$ of input and output temperatures, sensing the flow rates $m(O)$, $m(\theta_b)$ of the fluid in the boiler at the start of a cycle and, during its operation, after an elapsed time $\theta_b$, respectively, determining an incremental cost $\Phi$ of steam, with the time for actual sootblowing $\theta_c$ being known to determine the cost of steam for sootblowing S, calculating the heat flux $q(O)$, $q(\theta_b)$ of the boiler at the start of a cycle and, during its operation, after the elapsed time $\theta_b$, respectively, according to the equation $q=mc_p\Delta t$, calculating two scaling parameters K and P according to the equations

$$K=q(O)\times m(\theta_b)/m(O) \text{ and } q(O)-q(\theta_b)=K\theta_b/(P+\theta_b)$$

and using values for P, K, S to calculate the optimum cycle time according to the relationship:

$$O=P\ln\left[\frac{P+\theta_{opt}}{P}\right] - \frac{P(\theta_{opt}+\theta_c)}{\theta_{opt}+P} - \frac{S}{K}+\theta_c$$

The method may be applied to a boiler including a plurality of heat traps each with its own input of fluid, in which case the method preferably includes sensing the input and output temperatures for each heat trap, sensing the flow rate through each heat trap and calculating values for P and K to obtain optimum cycle times for each heat trap, and determining optimum cycle times $\theta_{opt}$ for each heat trap for optimum economic efficiency. Further, the method may be so carried out, in this event, such that a particular optimum cycle time is determined for each heat trap, the difference between time since previous sootblowing and optimum economic cycle time is determined for each heat trap, and the heat trap having the largest negative difference is exposed to a sootblowing operation.

According to a preferred aspect of the invention there is provided a method of optimizing a sootblowing operation in a boiler having a plurality of heat traps lying in series along a gas flow path by sootblowing only one heat trap at one time, the method comprising: selecting a set time between sootblowing operations of each heat trap; calculating an optimum time $\theta_{opt}$ between sootblowing operations of each heat trap by the above-defined method according to the invention; obtaining a difference value between set and optimum time for each heat trap;

Comparing the difference value for each heat trap with a selected value which is indicative of the desirability for initiating a sootblowing operation for each heat trap; and

initiating the sootblowing operation only in the heat trap having the lowest difference value between heat traps indicated as desirable for initiating a sootblowing operation. Preferably, sootblowing is initiated in a heat trap only when sootblowing is not taking place in any other heat trap.

For an understanding of the principles of the invention, reference is made to the following description of a typical embodiment thereof as illustrated in the accompanying drawings, in which:

Figure 1 is a schematic representation of a boiler for which optimum cycle time is to be determined for sootblowing;

Figure 2 is a graph showing a short cycle time for sootblowing;

Figure 3 is a graph showing a long cycle time for sootblowing;

Figure 4 is a graph showing incremental cost penalty plotted against cycle time;

Figure 5 is a graph showing incremental cost penalty plotted against cycle time for maximum efficiency which is used to predict optimum economic cycle time for sootblowing; and

Figures 6 and 7 are block diagrams showing exemplary logic for practising an embodiment of the invention.

A method for optimizing cycle time for sootblowing in a boiler 10 will now be described with reference to the drawings. The boiler 10 includes a plurality of heat traps or zones which include, for example, platens 12, secondary superheater 13 with input and output portions, reheater 14, primary superheater 16, and economizer 18.

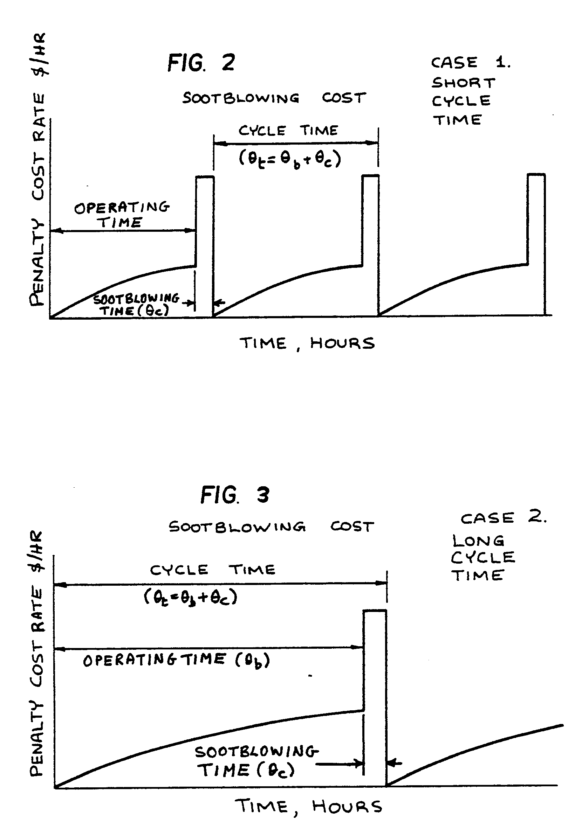

An approach to determining the optimum economic cycle time $\theta_{opt}$ of sootblowing is to consider that sootblowing requires an incremental increase in steam production. Scaling of a heat trap of the boiler results in a cost penalty C ($) since it decreases the heat transfer rate and thereby increases the incremental steam cost $\Phi$ ($/kg steam). When the heat trap is cleaned, an additional cost penalty S ($) is incurred as a result of using process steam for cleaning. The penalty cost rates during typical sootblowing cycles are shown in Figures 2 and 3 for an individual heat trap. As will be seen, each cycle comprises an operating time $\theta_b$ which is followed by a sootblowing time $\theta_c$.

In Figure 2 the cycle time ($\theta_t=\theta_b+\theta_c$) is relatively short. The penalty cost rate $Y(\theta_b)=dC/d\theta_b$($/hr) during the operating time $\theta_b$ increases with time, as deposition builds up, until sootblowing occurs, after which the heat trap is cleaned whereby the penalty cost rate at the start of a new cycle is zero. The penalty cost rate ($/hr) associated with sootblowing is, as shown, much higher, since this penalty cost rate is associated with consumption of product steam whereas the penalty cost rate during the operating time $\theta_b$ is associated with a decrease in efficiency. The combined area under the curve for each cycle ($\theta_b+\theta_c$) represents the overall cost penalty per sootblowing cycle.

In Figure 3 the cycle time shown is longer. The cost penalty (S) associated only with sootblowing would be less than that shown in Figure 2 since the number of cycles for a given period of time is less. However, the cost penalty (C) associated with lost efficiency due to increased scale buildup is greater. Therefore, the area under the curve shown in Figure 3, which represents the total cost penalty for scaling and sootblowing for a given time period, is greater than the corresponding area shown in Figure 2. Consequently, there must exist some optimum economic cycle time ($\theta_{opt}$) which minimizes the area under the curve and the corresponding overall cost penalty per sootblowing cycle.

The penalty cost rate at any given instant during the operating time $\theta_b$ can be expressed as:

$$Y(\theta_b)=dC/d\theta_b=K\theta_b/(P+\theta_b) \qquad (10)$$

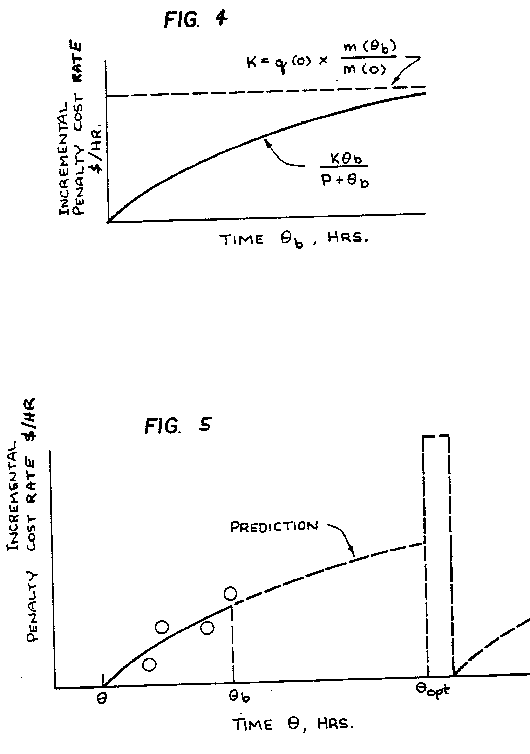

where P and K are scaling parameters. This is depicted graphically in Figure 4.

The cost penalty C during an operating time $\theta_b$ is, of course, the area under the curve of Figure 4 from time=zero to time=$\theta_b$ and can be determined by integrating Equation (10) as follows:

$$\int_0^c dC=K \int_0^{\theta b} \left(\frac{\theta_b}{P+\theta_b}\right)d\theta \qquad (11)$$

$$C=K\left\{\theta_b+P\ln\left[\frac{P}{P+\theta_b}\right]\right\} \qquad (12)$$

Equation (12) can be used as a basis for finding the cycle time which will result in the minimum penalty cost during a given period. As indicated above, each cycle consists of an operating time $\theta_b$ and a sootblowing time $\theta_c$, whereby the total time in hours for one cycle is $\theta_t=\theta_b+\theta_c$. If the total time for a given period is H hours, then the number of cycles in H hours is $H/(\theta_b+\theta_c)$.

The penalty cost during H hours=$C_H$=(Total cost/cycle)×(number of cycles/H hours). The overall cost/cycle=the penalty cost C for operating time $\theta_b$ plus the cost S for sootblowing, which is given by:

$$S= \left(\frac{M \text{ kg steam}}{hr}\right) \times \left(\Phi \text{ incremental steam cost}\frac{\$}{kg}\right)\times(\theta_c \text{ hr}) \qquad (13)$$

$$C_H=(\text{Total Cost/Cycle})\times(\text{Number of cycles in H hours})$$

4

$$C_H = \{K(\theta_b + P\ln[\frac{P}{P+\theta_b}]) + S\} \times \frac{H}{\theta_b + \theta_c} \qquad (14)$$

Under ordinary conditions, the only variable in Equation (14) is $\theta_b$. However, the incremental steam cost $\Phi$ and, therefore, the sootblowing cost S, may vary from cycle to cycle. Also, the scaling parameters P and K may vary as function of load. If $\Phi$, S, P, and K are held constant, then an instanteneous optimum economic cycle time ($\theta_{opt}$) can be obtained by setting the derivative of Equation (14) with respect to $\theta_b$ equal to zero and solving for $\theta_b = \theta_{opt}$:

$$\frac{dC_H}{d\theta_b} = P(\ln[\frac{P+\theta_b}{P}]) - \frac{P[\theta_b + \theta_c]}{\theta_b + P} - \frac{S}{K} + \theta_c = O \qquad (15)$$

for

$$\theta_b = \theta_{opt}$$

$$\frac{dC_H}{d\theta_b} = O, \qquad (16)$$

or

$$g(\theta_{opt}) = O = P\ln[\frac{P+\theta_{opt}}{P}] - \frac{P[\theta_{opt} + \theta_c]}{\theta_{opt} + P} - \frac{S}{K} + \theta_c \qquad (17)$$

A simple closed form solution like $\theta_{opt} = f(P, K, S, \theta)$, is not possible. However, the form $g(\theta_{opt}) = O$ can be solved using conventional trial and error techniques such as Regula-Falsi or Newton-Raphson. In the implementation of the optimum sootblowing method in digital instrumentation, a PID controller is used to drive the value of Equation (15) to zero.

The instantaneous optimum economic cycle time $\theta_{opt}$ is, thus, determined by holding $\Phi$, S, P, and K constant. As these parameters change, the optimum economic cycle will vary, however. With large swings in load, the rate of scale build-up on heat exchanger surfaces will be significantly affected, and $\theta_{opt}$ will vary from cycle to cycle for each heat trap. Instantaneous values of $\theta_{opt}$, which take into account changes in incremental steam cost and steam load, can be calculated if the parameters P and K are dynamically updated.

A simple predictive model can be used to estimate the incremental penalty cost rate $Y(\theta_b)$ and, thereby, infer values of the model parameters P and K from one-line measurements of the heat flux q and fluid flow rate m in the boiler heat trap as follows. Equation (10) indicates that $Y(\theta_b) = K\theta_b/(P+\theta_b)$. It can be demonstrated that the latter term is equal to $q(O) - q(\theta_b)$. That is:

$$q(O) - q(\theta_b) = K\theta_b/(P+\theta_b) \qquad (18)$$

The scaling parameter K is defined as follows:

$$K = q(O) \times m(\theta_b)/m(O) \qquad (19)$$

As will be evident, for any time $\theta_b$, if the values of $q(O)$, $q(\theta_b)$, $m(O)$ and $m(\theta_b)$ are known by measurement, Equations (18) and (19) can be solved to provide values for K and P. In practice, the heat flux q is obtained by making on-line measurements of the input and output heat trap fluid temperatures and the fluid flow rate m and calculating q from the relationship $q = mc_p\Delta t$, where $c_p$ is the specific heat of the fluid and $\Delta t$ is the difference between the input and output fluid temperatures.

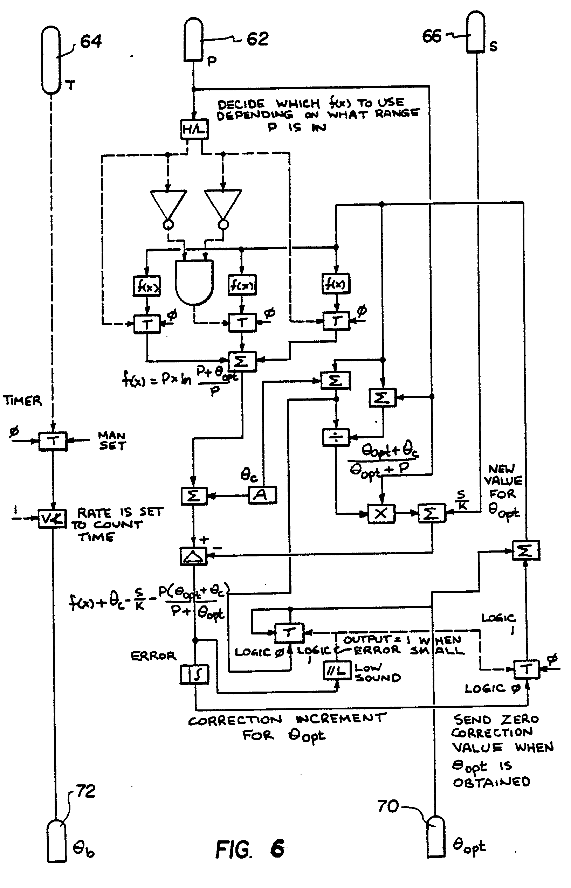

The objective of the model is to use on-line heat flux computations at time $\theta_b$ to predict a future optimum cycle time $\theta_{opt}$ where $\theta_{opt} \geq \theta_b$. This is shown graphically in Figure 5. Using this model, values of K and P can be calculated from Equations (18) and (19). For instance, the value of K can first be determined from Equation (19) and the value of P can then be determined from Equation (18) for each value of $\theta_b$ by means of the following equation derived from Equation (18):

$$P = \frac{[K - Y(\theta_b)] \times \theta_b}{Y(\theta_b)} \qquad (20)$$

Using the values of K and P from Equations (19) and (20), Equation (17) can be solved for $\theta_{opt}$ by integrating an error from a null balance recursive solution technique, which is a conventional trial and error technique (see above).

The model utilizes measurements of "tube side" fluid temperature (or enthalpy), which is readily available. No "gas side" furnace temperatures are necessary. The optimum cycle time $\theta_{opt}$ is determined instantaneously and adapts to varying operating and economic conditions.

The optimum economic cycle time for each heat trap is determined independently of the other heat traps. However, interaction among the various heat traps is taken into account because each heat trap affects the overall efficiency and resultant incremental steam cost. Calculation of overall efficiency is based on the losses method and is not affected by the heat trap performance calculations.

### TABLE II
### Sootblower sequencing

| Heat trap | Operator optimal time $\theta_{opt}$, min | Time since start of cycle $\theta_b$, min | $\theta_{opt}-\theta_b$, min |
|---|---|---|---|
| Secondary Superheater | 83 | 84 | −1 |
| Reheat Superheater | 104 | 95 | 9 |
| Primary Superheater | 155 | 110 | 45 |
| Reheat Superheater | 176 | 15 | 161 |
| Economizer | 240 | 174 | 66 |

Logic configurations for the on-line predictive penalty cost model, the instantaneous optimum economic cycle time calculation, and the sootblowing sequencer are described below.

In a first logic configuration (not shown), the fluid flow rate m and the fluid input and output temperatures for a heat trap are provided by respective transmitters. The temperature difference $\Delta T$ is obtained in a comparator and its output is multiplied by the flow rate m in a multiplication unit. The output of this unit is multiplied again by a constant which represents the specific heat ($c_p$) of the fluid (water) to produce an output $mc_p\Delta t$ that represents the heat flux q in tubes of the heat trap at various times during boiler operation. After the expiration of an operating time $\theta_b$, the value of which is set manually as explained below, the flux value $q(\theta_b)$ for the end of the timer $\theta_b$ is calculated and compared with a stored initial value $q(O)$ for heat flux (right after a sootblowing operation) which is compared to obtain the difference value $q(O)-q(\theta_b)$: see the left hand side of Equation (18). The ratio of the flow rate $m(\theta_b)$ after the termination of the operating time $\theta_b$ to a stored value of the flow rate $m(O)$ at the beginning of the operating time $\theta_b$ also is derived: see the right hand side of Equation (19). Thus, values for the scaling parameters P and K can be derived. Transfer terminals that store the values $q(O)$ and $m(O)$ are operated by pulses from a gate which is connected to a controller that controls sootblowing initiation. Signals from a cost transmitter and a load transmitter are processed by logic circuitry to generate the incremental steam cost $\Phi$ and the sootblowing cost S.

The first logic configuration produces, on terminals 62, 64 and 66 shown in Figure 6, which depicts a second logic configuration, the scaling parameter P, a signal T for a sootblower timer, and the sootblowing cost S.

As shown in Figure 6, these terminals supply their respective signals to the second logic configuration which is utilized to generate the optimum cycle time $\theta_{opt}$ which is supplied at a terminal 70. The operating time $\theta_b$ is manually set, for example, for maximum fuel efficiency and provided at a terminal 72. This value of the operating time $\theta_b$ is also used in the first logic configuration to generate the scaling parameter P.

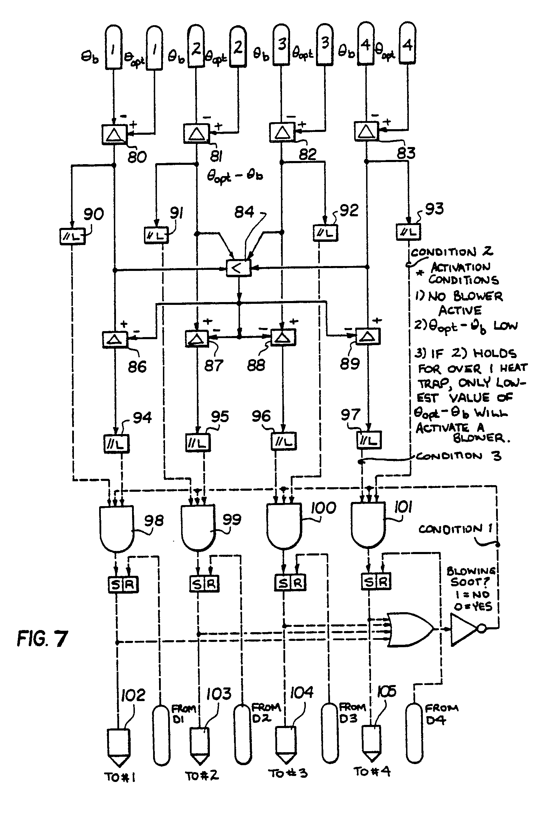

In a third logic configuration shown in Figure 7, the set and optimum values $\theta_b$ and $\theta_{opt}$ from four heat traps, numbered 1 to 4, are shown. Comparators 80 to 83 obtain a difference between the set and optimum values and a comparator 84 chooses the smallest difference. The conditions which must be met before the sootblower of a particular heat trap is activated are as follows:

(a) no other blower is currently active.

(b) the difference between the set operating time $\theta_b$ and the optimum sootblowing time $\theta_{opt}$ is sufficiently low, and

(c) if condition b) exists for more than one heat trap, the heat trap at the lowest value is chosen.

For this purpose, comparators 86 to 89 are utilized as well as lower limit detectors 90 and 97. AND gates 98, 99, 100, and 101 compare Boolean logic signals and only the AND gate with all positive inputs is activated to operate its respective sootblowing equipment which is connected to control elements 102, 103, 104, and 105, respectively.

While a specific embodiment of the invention has been shown and described in detail to illustrate the application of the principles of the invention, it can be embodied otherwise without departing from such principles.

**Claims**

1. A method of optimizing cycle time $\theta_{opt}$ of sootblowing during the operation of a boiler having an input of fluid with a particular specific heat $c_p$ to generate steam at a particular cost per unit of heat in the boiler, the method being characterised by sensing the input and output temperatures of fluid to and from the boiler to obtain a difference $\Delta t$ of input and output temperatures, sensing the flow rates $m(O)$, $m(\theta_b)$ of the fluid in the boiler at the start of a cycle and, during its operation, after an elapsed time $\theta_b$, respectively, determining an incremental cost $\Phi$ of steam, with the time for actual sootblowing $\theta_c$ being known to determine the cost of steam for sootblowing S, calculating the heat flux $q(O)$, $q(\theta_b)$ of the boiler at the start of a cycle and, during its operation, after the elapsed time $\theta_b$, respectively, according to the equation $q = mc_p\Delta t$, calculating two scaling parameters K and P according to the equations

$$K = q(O) \times m(\theta_b)/m(O) \quad \text{and} \quad q(O) - q(\theta_b) = K\theta_b/(P + \theta_b)$$

and using values for P, K, S to calculate the optimum cycle time according to the relationship:

$$O = P\ln \left[\frac{P + \theta_{opt}}{P}\right] - \frac{P(\theta_{opt} + \theta_c)}{\theta_{opt} + P} - \frac{S}{K} + \theta_c$$

2. A method according to claim 1, wherein the boiler includes a plurality of heat traps each with its own input of fluid, the method including sensing the input and output temperatures for each heat trap, sensing the flow rate through each heat trap and calculating values for P and K to obtain optimum cycle times for each heat trap, and determining optimum cycle times $\theta_{opt}$ for each heat trap for optimum economic efficiency.

3. A method according to claim 2, wherein a particular optimum cycle time is determined for each heat trap, the difference between time since previous sootblowing and optimum economic cycle time is determined for each heat trap, and the heat trap having the largest negative difference is exposed to a sootblowing operation.

4. A method of optimizing a sootblowing operation in a boiler having a plurality of heat traps lying in series along a gas flow path by sootblowing only one heat trap at one time, the method being characterised by:
selecting a set time between sootblowing operations of each heat trap;
calculating an optimum time $\theta_{opt}$ between sootblowing operations of each heat trap by a method as set forth in claim 1;
obtaining a difference value between set and optimum time for each heat trap;
comparing the difference value for each heat trap with a selected value which is indicative of the desirability for initiating a sootblowing operation for each heat trap; and
initiating the sootblowing operation only in the heat trap having the lowest difference value between heat traps indicated as desirable for initiating a sootblowing operation.

5. A method according to claim 4, including initiating sootblowing in a heat trap only when sootblowing is not taking place in any other heat trap.

**Patentansprüche**

1. Verfahren zum Optimieren der Zykluszeit $\theta_{opt}$ für das Rußabblasen während des Betriebes eines Kessels, der eine Zufuhr von Fluid mit einer bestimmten spezifischen Wärme $c_p$ hat, um zu bestimmten Kosten pro Wärmeeinheit Dampf in dem Kessel zu erzeugen, wobei das Verfahren gekennzeichnet ist durch Abfühlen der Eingangs- und Ausgangstemperaturen des Fluids zu dem Kessel bzw. von dem Kessel, um den Unterschied $\Delta t$ zwischen Ausgangs- und Eingangstemperaturen zu erhalten, Abfühlen der Flußraten $m(O)$, $m(\theta_b)$ des Fluids im Kessel zu Beginn des Zyklus bzw. während seines Betriebes nach einer verstrichenen Zeit $\theta_b$, Bestimmen der Zusatzkosten $\Phi$ für Dampf, wobei die Zeit für das jeweilige Rußabblasen $\theta_c$ bekannt ist, um die Dampfkosten für das Rußabblasen S zu bestimmen, Berechnen des Wärmeflusses $q(O)$, $q(\theta_b)$ des Kessels zu Beginn eines Zyklus bzw. während seines Betriebes nach der verstrichenen Zeit $\theta_b$ gemäß der Gleichung $q = mc_p\Delta t$ unter Berechnung zweier Skalierungsparameter K und P gemäß den Gleichungen

$$K = q(O) \times m(\theta_b)/m(O) \quad \text{and} \quad q(O) - q(\theta_b) = K\theta_b/(P + \theta_b)$$

und Unter Verwendung der Werte für P, K und S, um die optimale Zykluszeit gemäß der Beziehung:

$$O = P\ln \left[\frac{P + \theta_{opt}}{P}\right] - \frac{P(\theta_{opt} + \theta_c)}{\theta_{opt} + P} - \frac{S}{K} + \theta_c$$

zu berechnen.

2. Verfahren nach Anspruch 1, wobei der Kessel eine Vielzahl von Heizklappen aufweist, die jeweils eine eigene Fluidzufuhr haben, wobei das Verfahren des Abfühlen der Eingangs- und Ausgangstemperaturen für jede Heizklappe, das Abfühlen der Durchflußrate durch jede Heizklappe und das Berechnen der Werte für P und K einschließt, um optimale Zykluszeiten für jede Heizklappe zu erhalten, sowie auch das Bestimmen der optimalen Zykluszeiten $\theta_{opt}$ für jede Heizklappe einschließt für eine optimale ökonomische Wirksamkeit.

3. Verfahren nach Anspruch 2, wobei eine bestimmte optimale Zykluszeit für jede Heizklappe bestimmt wird, der Zeitunterschied zwischen einem vorhergehenden Rußabblasen und der optimal wirtschaftlichen Zykluszeit für jede Heizklappe bestimmt wird und die Heizklappe mit der größten negativen Differenz einem Rußabblasvorgang ausgesetzt wird.

4. Verfahren zum Optimieren eines Rußabblasvorganges in einem Kessel mit einer Mehrzahl von Heizklappen, welche in Reihe entlang eines Gasströmungspfades liegen durch Rußabblasen jeweils nur einer Heizklappe zu einem Zeitpunkt, wobei das Verfahren gekennzeichnet ist durch Auswahl einer festgesetzten Zeit zwischen den Rußabblasvorgängen für jede Heizklappe; Berechnen einer optimalen Zeit $\theta_{opt}$ zwischen den Rußabblasvorgängen für jede Heizklappe nach einem Verfahren wie in Anspruch 1 dargestellt;

Erhalten eines Differenzwertes zwischen der gesetzten und der optimalen Zeit für jede Heizklappe;

Vergleichen des Unterschiedswertes für jede Heizklappe mit einem ausgewählten Wert, der anzeigt, ob das Auslösen eines Rußablasvorganges für jede Wärmeklappe wünschenswert ist; und

Auslösen des Rußabblasvorganges nur für die Heizklappe, welche von allen Heizklappen, für die das Auslösen eines Rußabblasvorganges als wünschenswert angezeigt ist, den geringsten Differenzbetrag hat.

5. Verfahren nach Anspruch 4, einschließlich des Auslösens des Rußabblasens in einer Heizklappe nur dann, wenn das Rußabblasen in keiner anderen Heizklappe stattfindet.

## Revendications

1. Un procédé d'optimisation de la durée de cycle $\theta_{opt}$ pour le soufflage de la suie pendant le fonctionnement d'une chaudière comportant une entrée de fluide avec une chaleur spécifique particulière $c_p$, pour produire de la vapeur à un coût par unité de chaleur particulier dans la chaudière, le procédé étant caractérisé en ce qu'on détecte les températures d'entrée et de sortie du fluide entrant dans la chaudière et sortant de celle-ci, pour obtenir une différence $\Delta t$ des températures d'entrée et de sortie, on détecte les débits respectifs $m(O)$, $m(\theta_b)$ du fluide dans la chaudière au début d'un cycle et pendant son fonctionnement, après une durée écoulée $\theta_b$, on détermine un coût incrémentiel $\Phi$ de la vapeur, connaissant la durée pour l'opération réelle de soufflage de suie, $\theta_c$, afin de déterminer le coût de vapeur pour le soufflage de suie, S, on calcule les flux de chaleur respectifs $g(O)$, $g(\theta_b)$ de la chaudière au début d'un cycle et, pendant son fonctionnement, après la durée écoulée $\theta_b$, conformément à l'équation $q=mc_p\Delta t$, on calcule deux paramètres de facteur d'échelle K et P conformément aux équations:

$$K=q(O)\times m(\theta_b)/m(O) \text{ et } q(O)-q(\theta_b)=K\theta_b/(P+\theta_b)$$

et on utilise des valeurs de P, K, S pour calculer la durée de cycle optimale conformément à la relation:

$$O=P\ln\left[\frac{P+\theta_{opt}}{P}\right] - \frac{P(\theta_{opt}+\theta_c)}{\theta_{opt}+P} - \frac{S}{K}+\theta_c$$

2. Un procédé selon la revendication 1, dans lequel la chaudière comprend un ensemble d'échangeurs de chaleur, ayant chacun sa propre entrée de fluide, le procédé comprenant la détection des températures d'entrée et de sortie pour chaque échangeur de chaleur, la détection du débit dans chaque échangeur de chaleur et le calcul de valeurs pour P et K, de façon à obtenir des durées de cycle optimales pour chaque échangeur de chaleur, et la détermination de durées de cycle optimales $\theta_{opt}$ pour chaque échangeur de chaleur pour obtenir un rendement économique optimal.

3. Un procédé selon la revendication 2, dans lequel on détermine une durée de cycle optimale particulière pour chaque échangeur de chaleur, on détermine pour chaque échangeur de chaleur la différence entre la durée écoulée depuis l'opération de soufflage de suie précédente et la durée de cycle économique optimale, et on effectue une opération de soufflage de suie pour l'échangeur de chaleur qui présente la plus grande différence négative.

4. Un procédé d'optimisation d'une opération de soufflage de suie dans une chaudière comprenant un ensemble d'échangeurs de chaleur qui s'étendent en série le long d'un chemin d'écoulement de gaz, en n'effectuant l'opération de soufflage de suie que pour un seul échangeur de chaleur à la fois, le procédé étant caractérisé par:

la sélection d'une durée fixée entre des opérations de soufflage de suie pour chaque échangeur de chaleur;

le calcul d'une durée optimale $\theta_{opt}$ entre des opérations de soufflage de suie de chaque échangeur de chaleur par un procédé exposé dans la revendication 1;

l'obtention d'une valeur de différence entre la durée fixée et la durée optimale pour chaque échangeur de chaleur;

la comparaison de la valeur de différence pour chaque échangeur de chaleur avec une valeur sélectionnée qui indique qu'il est souhaitable de déclencher une opération de soufflage de suie pour chaque échangeur de chaleur; et

le déclenchement de l'opération de soufflage de suie uniquement dans l'échangeur de chaleur qui présente la plus faible différence, parmi les échangeurs de chaleur pour lesquels il a été indiqué qu'il était souhaitable de déclencher une opération de soufflage de suie.

5. Un procédé selon la revendication 4, comprenant le déclenchement d'une opération de soufflage de suie dans un échangeur de chaleur seulement lorsqu'une opération de soufflage de suie n'a pas lieu dans n'importe quel autre échangeur de chaleur.

PLATENS

SECONDARY SUPERHEATER

REHEATER

12

IN

OUT

14

13

PRIMARY SUPERHEATER

ECONOMIZER

10

BOILER

16

18

*FIG. 1*

FIG. 2

CASE 1.
SHORT
CYCLE
TIME

SOOTBLOWING COST

CYCLE TIME
$(\theta_t = \theta_b + \theta_c)$

OPERATING TIME

PENALTY COST RATE $/HR

SOOTBLOWING TIME $(\theta_c)$

TIME, HOURS

FIG. 3

CASE 2.
LONG
CYCLE
TIME

SOOTBLOWING COST

CYCLE TIME
$(\theta_t = \theta_b + \theta_c)$

OPERATING TIME $(\theta_b)$

PENALTY COST RATE $/HR

SOOTBLOWING TIME $(\theta_c)$

TIME, HOURS

## FIG. 4

$$K = q(0) \times \frac{m(\theta_b)}{m(0)}$$

INCREMENTAL PENALTY COST RATE $/HR.

$$\frac{K\theta_b}{P+\theta_b}$$

TIME $\theta_b$, HRS.

## FIG. 5

INCREMENTAL PENALTY COST RATE $/HR

PREDICTION

$\theta$   $\theta_b$   $\theta_{opt}$

TIME $\theta$, HRS.

FIG. 6

$$f(x) = P \times \ln \frac{P + \theta_{opt}}{P}$$

$$f(x) + \theta_c - \frac{S}{K} - \frac{P(\theta_{opt} + \theta_c)}{P + \theta_{opt}}$$

$$\frac{\theta_{opt} + \theta_c}{\theta_{opt} + P}$$

DECIDE WHICH f(x) TO USE
DEPENDING ON WHAT RANGE
P IS IN

TIMER

MAN SET

RATE IS SET TO COUNT TIME

NEW VALUE FOR $\theta_{opt}$

ERROR

OUTPUT = 1 WHEN ERROR SMALL

LOGIC 1

LOGIC Ø    LOGIC 1

LOW SOUND

LOGIC Ø

CORRECTION INCREMENT
FOR $\theta_{opt}$

SEND ZERO
CORRECTION
VALUE WHEN
$\theta_{opt}$ IS
OBTAINED

$\theta_b$

$\theta_{opt}$

FIG. 7